# EUROPEAN PATENT SPECIFICATION

(11) **EP 4 378 143 B1**
(45) Date of publication and mention of the grant of the patent: **04.11.2026**
(21) Application number: 22777169.8
(22) Date of filing: 02.09.2022
(51) Int. Cl.: H04L 51/58, H04L 51/23, H04L 51/10

(54) **SESSION-LESS AND CONNECTION-LESS MESSAGE PROTOCOL FOR RCS MESSAGES**
SITZUNGSLOSES UND VERBINDUNGSLOSES NACHRICHTENPROTOKOLL FÜR RCS-NACHRICHTEN
PROTOCOLE DE MESSAGERIE SANS SESSION ET SANS CONNEXION POUR MESSAGES RCS

(30) Priority: 03.09.2021 US 202163240825 P
(43) Date of publication of application: 05.06.2024
(73) Proprietor: Google LLC, Mountain View, CA 94043 (US)
(72) Inventor: HILBUCH, Amit Sebastian, Mountain View, California 94043 (US); GONZALEZ, Jonathan, 8002 Zürich (CH); AL-NAFFOURI, Basel, Mountain View, California 94043 (US); KIRUBANANDAN, Nandakiran K., Mountain View, California 94043 (US); HAMPSON, Seth Franklin, Mountain View, California 94043 (US); UBERTI, Justin Russell, Mountain View, California 94043 (US)
(74) Representative: Colonna, Matthew Oliver
(86) International application number: PCT/US2022/075933
(87) International publication number: WO 2023/034982

(56) References cited:
- EP-A1- 3 664 384
- CN-A- 103 067 412
- US-A1- 2017 181 215
- US-A1- 2020 305 234
- US-A1- 2021 014 182

## Description

This application claims the benefit of U.S. Provisional Patent Application No. 63/240,825 filed September 3 2021.

### BACKGROUND

Rich Communication Services (RCS) messaging utilizes protocols that date back to the dawn of Voice over Internet Protocol (VoIP), including Session Initiation Protocol (SIP) and Session Initiation Protocol for Instant Messaging and Presence Leveraging Extensions (SIMPLE). Such protocols were designed for an era in which wired networks predominated and connection quality was more predictable. Thus, RCS messaging was designed with the assumption of a reliable network connection. US 2021/014182 A1 discloses a method and system for providing interoperability for Rich Communications Suite/Systems (RCS) messaging, wherein, if a target network device cannot receive RCS messages, electronic messages are modified on an RCS message application to include an electronic link to an RCS interoperability application.

### SUMMARY

According to the present invention, there is provided a method according to claim 1, a method according to claim 10, a computing device according to claim 14, and a computer program product according to claim 15. In general, aspects of the present disclosure are directed to techniques for transmitting Rich Communication Services (RCS) messages without requiring a persistent connection. In some examples, a client device may be configured to transmit and receive messages formatted with the RCS protocol, such as messages with content serialized according to the RCS protocol, and the techniques of the present disclosure may institute a message transport based on an over-the-top (OTT) protocol to deliver the messages formatted with the RCS protocol. The OTT protocol may advantageously include one or more of the following features: (1) long-lived authorization via a connection-independent token; (2) immediate data transfer during connection formation; and/or (3) session-less and connection-less transmission of messages formatted with the RCS protocol. To transmit messages using the OTT protocol, a connection to the client device may be established in response to receipt of a remote procedure call (RPC) message that includes an authorization token. The RPC message used to initiate the connection may also include data for transmission to another client device.

Modern wireless communication networks are frequently lossy and experience high latency, and RCS messaging on modern wireless communication networks poses challenges. For instance, an exchange of a single RCS message can require at least twelve (12) roundtrip exchanges. If a connection is lost at any one of the thirteen exchanges, then the process must begin again at the first exchange. Thus, the lossy/high latency nature of modem wireless communication networks has performance implications for RCS messaging. The techniques of the present disclosure may assist with transmitting the RCS protocol messages from the client device(s) in a manner that does not require a persistent connection to a recipient client device. Thus, the effects of lossy/high latency network connections on message delivery times may be advantageously reduced.

In some examples, a method includes receiving, with one or more processors of a server device and from a first client device, data corresponding to a message, wherein a payload of the message is formatted in a rich communication services (RCS) protocol and wherein the payload is packaged according to the RCS protocol at a transport layer of the message; determining, with the one or more processors, a recipient messaging protocol for the message; in response to determining that the recipient messaging protocol for the message is an over-the-top (OTT) protocol, repackaging, with the one or more processors, the payload of the message according to the OTT protocol at a transport layer of a repackaged message to generate the repackaged message; and transmitting, with the one or more processors, data corresponding to the repackaged message to a second client device.

In some examples, a client device includes one or more processors; and a memory coupled to the one or more processors, the memory storing one or more programs that, when executed by the one or more processors, cause the one or more processors to: receive, receiving, with one or more processors of a server device and from a first client device, data corresponding to a message, wherein a payload of the message is formatted in a rich communication services (RCS) protocol and wherein the payload is packaged according to the RCS protocol at a transport layer of the message; determine a recipient messaging protocol for the message; in response to determining that the recipient messaging protocol for the message is an over-the-top (OTT) protocol, repackage the payload of the message according to the OTT protocol at a transport layer of a repackaged message to generate the repackaged message; and transmit data corresponding to the repackaged message to a second client device.

In some examples, a non-transitory computer-readable storage medium storing instructions that, when executed by one or more processors of a server device, cause the one or more processors to receive, from a first client device, data corresponding to a message, wherein a payload of the message is formatted in a rich communication services (RCS) protocol and wherein the payload is packaged according to the RCS protocol at a transport layer of the message; determine a recipient messaging protocol for the message; in response to determining that the recipient messaging protocol for the message is an over-the-top (OTT) protocol, repackage the payload of the message according to the OTT protocol at a transport layer of a repackaged message to generate the repackaged message; and transmit data corresponding to the repackaged message to a second client device.

In some examples, a method includes generating, using one or more processors of a first client device, a message, wherein a payload of the message is formatted in a rich communication services (RCS) protocol, and wherein the payload of the message is packaged according to an over-the-top (OTT) protocol at a transport layer; and transmitting, using the one or more processors, data corresponding to the message to a server device to deliver the payload of the message to a second client device.

In some examples, a client device includes one or more processors; and a memory coupled to the one or more processors, the memory storing one or more programs that, when executed by the one or more processors, cause the one or more processors to: generate a message, wherein a payload of the message is formatted in a rich communication services (RCS) protocol, and wherein the payload of the message is packaged according to an over-the-top (OTT) protocol at a transport layer; and transmit data corresponding to the message to a server device to deliver the payload of the message to a second client device.

In some examples, a non-transitory computer-readable storage medium storing instructions that, when executed by one or more processors of a client device, cause the one or more processors to generate a message, wherein a payload of the message is formatted in a rich communication services (RCS) protocol, and wherein the payload of the message is packaged according to an over-the-top (OTT) protocol at a transport layer; and transmit data corresponding to the message to a server device to deliver the payload of the message to a second client device.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

FIG. 1 illustrates an example network environment for providing communication between one or more clients and a server according to example embodiments of the present disclosure.
FIG. 2 schematically illustrates an example electronic system with which example embodiments of the present disclosure are implementable.
FIG. 3A illustrates a process by which messages may be transmitted without requiring a persistent connection according to example embodiments of the present disclosure.
FIG. 3B illustrates a layer diagram for a messaging application configured for packaging an RCS payload within an OTT transport layer according to example embodiments of the present disclosure.
FIG. 4 illustrates a process by which a client may be registered with a server according to example embodiments of the present disclosure.
FIG. 5 illustrates a process by which a client may be reregistered with a server according to example embodiments of the present disclosure.
FIG. 6 illustrates a process by which a client may register capabilities with a server according to example embodiments of the present disclosure.
FIG. 7 illustrates a process by which a client may request capabilities of another client from a server according to example embodiments of the present disclosure.
FIG. 8 illustrates a process by which a client may subscribe to receive capabilities of another client from a server according to example embodiments of the present disclosure.
FIG. 9 illustrates a process by which a client may send messages to a server according to example embodiments of the present disclosure.
FIG. 10 illustrates a process by which a client may receive messages from a server according to example embodiments of the present disclosure.
FIG. 11 illustrates a process by which a client may acknowledge receipt of messages from a server according to example embodiments of the present disclosure.
FIG. 12 illustrates a method for sending RCS messages within an OTT protocol according to example embodiments of the present disclosure.
FIG. 13 illustrates a method for notifying a client to retrieve RCS messages according to example embodiments of the present disclosure.
FIG. 14 illustrates a method for sending RCS messages without requiring a persistent connection according to example embodiments of the present disclosure.
FIG. 15 illustrates a method for sending RCS messages without requiring a persistent connection according to example embodiments of the present disclosure.

Reference numerals that are repeated across plural figures are intended to identify the same features in various implementations.

### DETAILED DESCRIPTION

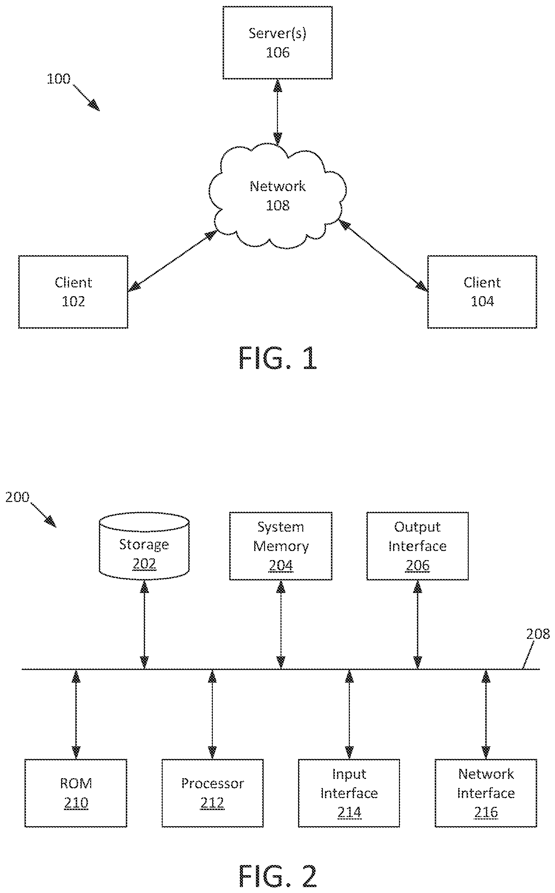

FIG. 1 illustrates an example network environment which can provide for communication between one or more clients and one or more servers. Network environment 100 includes a client 102, a client 104, and one or more server(s) 106. Client 102, client 104 and server(s) 106 may communicate with one another through a network 108. Client 102, client 104 and server(s) 106 may send/receive data packets between one another and may send/receive application software executed or stored on one another. Thus, clients 102, 104 and server(s) 106 may be communicatively coupled via network 108. While FIG. 1 illustrates two clients 102, 104, it will be understood that the present subject matter may also be used with multiple additional clients communicating with server(s) 106.

Each of clients 102 and 104 may represent various forms of processing devices. Example processing devices can include a desktop computer, a laptop computer, a handheld computer, a mobile computing device (e.g., smartphone or tablet), a gaming console or controller, a wearable computing device, an embedded computing device, a personal digital assistant (PDA), a cellular telephone, a network appliance, a camera, an enhanced general packet radio service (EGPRS) mobile phone, a media player, a navigation device, an email device, or a combination of any these data processing devices or other data processing devices.

Each of clients 102 and 104 may include one or more processors and one or more memories. The one or more processors may be any suitable processing device (e.g., a processor core, a microprocessor, an ASIC, a FPGA, a controller, a microcontroller, etc.) and may be one processor or a plurality of processors that are operatively connected. The one or more memories may include one or more non-transitory computer-readable storage mediums, such as RAM, ROM, EEPROM, EPROM, flash memory devices, magnetic disks, etc., and combinations thereof. The one or more memories may store data and instructions, which are executed by the one or more processor, to cause the clients 102, 104 to perform operations.

Server(s) 106 may include one or more computing devices (e.g., one or more servers), and one or more computer-readable storage devices (e.g., one or more databases). Server(s) 106 may be any system or device having a processor, a memory, and communications capability for providing content to the electronic devices (e.g., clients 102, 104). In some example aspects, server(s) 106 may be a single computing device, for example, a computer server. In other embodiments, server(s) 106 may represent more than one computing device working together to perform the actions of a server computer (e.g., cloud computing). Further, server(s) 106 may represent various forms of servers including, but not limited to a web server, an application server, a proxy server, a network server, or a server farm.

The server(s) 106 may include one or more processors and one or more memories. The one or more processors may be any suitable processing device (e.g., a processor core, a microprocessor, an ASIC, a FPGA, a controller, a microcontroller, etc.) and may be one processor or a plurality of processors that are operatively connected. The one or more memories may include one or more non-transitory computer-readable storage mediums, such as RAM, ROM, EEPROM, EPROM, flash memory devices, magnetic disks, etc., and combinations thereof. The one or more memories may store data and instructions, which are executed by the one or more processors, to cause the server(s) 106 to perform operations.

In some aspects, network environment 100 may be a distributed client/server system that spans one or more networks, for example, network 108. Network 108 may be a large computer network, for example, a wide area network (WAN), the Internet, a cellular network, or a combination thereof connecting any number of mobile clients, fixed clients, and servers. Further, network 108 may include, but is not limited to, any one or more of the following network topologies, including a bus network, a star network, a ring network, a mesh network, a star-bus network, tree or hierarchical network, and the like.

FIG. 2 schematically illustrates an example electronic system with which some implementations of the present subject matter may be implemented. Electronic system 200 may be a computer, smart phone, PDA, or any other sort of electronic device. Such an electronic system includes various types of computer readable media and interfaces for various other types of computer readable media. Electronic system 200 includes a permanent storage device 202, a system memory 204, an output interface 206, a bus 208, a read-only memory (ROM) 210, processing unit(s) 212, an input interface 214, and a network interface 216.

Bus 208 collectively represents all system, peripheral, and chipset buses that communicatively connect the various internal devices of electronic system 200. For instance, bus 208 communicatively connects processing unit(s) 212 with ROM 210, system memory 204, and permanent storage device 202. From these various memory units, processing unit(s) 212 retrieves instructions to execute and data to process in order to execute the various example processes of the subject disclosure. The processing unit(s) can be a single processor or a multi-core processor in different implementations.

ROM 210 stores static data and instructions that are needed by processing unit(s) 212 and other modules of the electronic system 200. Permanent storage device 202, on the other hand, is a read-and-write memory device. Permanent storage device 202 is a nonvolatile memory unit that stores instructions and data even when electronic system 200 is off. Some example implementations of the present subject matter use a mass-storage device (for example, a magnetic or optical disk and a corresponding disk drive) as permanent storage device 202. Other implementations use a removable storage device (for example, a floppy disk, flash drive, and a corresponding disk drive) as permanent storage device 202. Like permanent storage device 202, system memory 204 is a read-and-write memory device. However, unlike storage device 202, system memory 204 is a volatile read-and-write memory, such a random access memory. System memory 204 stores some of the instructions and data that the processing unit(s) 212 needs at runtime. In some example implementations, the example processes of the present subject matter are stored in system memory 204, permanent storage device 202, and/or ROM 210. For example, the various memory units include instructions for providing connectivity between a client and a server. From these various memory units, processing unit(s) 212 retrieves instructions to execute and data to process in order to execute the example processes of some implementations.

Bus 208 also connects to input interface 214 and output interface 206. Input interface 214 allows a user to communicate information and select commands to the electronic system 200. Input devices used with input interface 214 include, for example, alphanumeric keyboards and pointing devices (also called "cursor control devices"). Output interfaces 206 allows, for example, the display of images generated by the electronic system 200. Output devices used with output interface 206 include, for example, printers and display devices, for example, cathode ray tubes (CRT) or liquid crystal displays (LCD). Some implementations include devices, for example, a touchscreen that functions as both input and output devices.

Bus 208 also couples electronic system 200 to a network (not shown) through a network interface 216. In this manner, the computer can be a part of a network of computers (for example, a local area network ("LAN"), a wide area network ("WAN"), or an Intranet, or a network of networks, for example, the Internet. Any or all components of electronic system 200 can be used in conjunction with the subject disclosure.

As an example, one or more of client 102, client 104, and server(s) 106 (FIG. 1) may be constructed in the manner described above for electronic system 200 and/or include the components described above for electronic system 200.

According to example embodiments, sending a message formatted in RCS protocol from a first client to a second client may simply require: (1) establishing a connection between the first client and a server; (2) invoking a send message RPC from the first client to the server; (3) transmitting a pull trigger from the server to the second client; (4) invoking a bind RPC from the second client to the server; and (5) streaming the message from the server to the second client. The message streamed from the server to the second client may be formatted in an OTT protocol and not in RCS protocol. However, a payload of the message streamed from the server to the second client and/or any attachments may remain in the RCS format of the message from the first client. Thus, messages sent from the first client to the second client via the server may be sent from the server to the second client via the OTT protocol when the second client is configured for receipt of messages formatted in the OTT protocol (or via RCS protocol when the second client is configured for receipt of messages formatted in the RCS protocol) without requiring rewriting of the message from the first client by the server. Advantageously, example aspects of the present subject matter may maintain an internal format of the original message, which allows message systems to interoperate not just with OTT protocol configured clients but also RCS protocol configured clients.

In particular example embodiments, packaging the message formatted in the RCS protocol into a payload of a message formatted in an OTT protocol may significantly reduce a number of roundtrips between a client and a server for delivery of messages formatted in RCS protocol, e.g., from twelve (12) to one or two (1 or 2). Thus, message latency and reliability may be significantly improved. Moreover, latency and reliability improvements may also be realized by utilizing the pull trigger to alert the second client that a message is available for download or other server-to-client notifications, e.g., due to the reduction of the requirement for a long-lived persistent connection between the server and client. Further, example aspects of the present subject matter may advantageously allow for easier spam reporting, end-to-end encryption key management, interaction with business messaging platforms, and multi-device pairing.

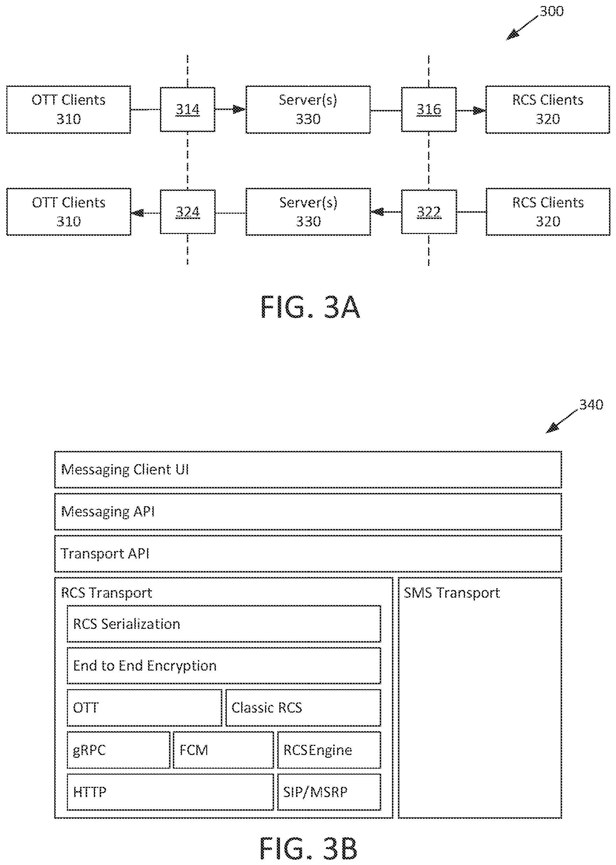

FIG. 3A illustrates a process 300 by which messages may be transmitted without requiring a persistent connection according to example embodiments of the present disclosure. In FIG. 3A, client devices 310 may be configured for sending and receiving messages formatted in OTT protocol, and client devices 320 may be configured for sending and receiving messages formatted in RCS protocol. One or more server(s) 330 is configured for transmitting messages between OTT clients 310, between RCS clients 320, and between OCS clients 310 and RCS clients 320. Thus, e.g., server(s) 330 may transmit messages: between two OTT clients 310; between two RCS clients 320; from one OTT client 310 to one RCS client 320; and/or from one RCS client 320 to one OTT client 310.

As shown in the top portion of FIG. 3A, process 300 may transmit messages from OTT client 310 to RCS client 320 via server(s) 330. In particular, OTT client 310 may format message 314 such that a payload of message 314, e.g., one or both of a serialization layer and an encryption layer of message 314, is formatted in the RCS protocol and is packaged according to the OTT protocol. In particular, message 314 may be formatted in the OTT protocol at a transport layer. OTT client 310 may thus be configured for transmitting message 314 to server(s) 330 with the payload of message 314 serialized according to the RCS protocol and packaged according to the OTT protocol at the transport layer, and server(s) 330 may receive message 314 with the payload of message 314 serialized according to the RCS protocol and packaged according to the OTT protocol at the transport layer. To transmit message 314, the OTT client 310 may check for an open connection between OTT client 310 and server(s) 330. When the open connection exists, OTT client 310 may transmit message 314 to server(s) 330. When no open connection exists, the OTT client 310 may establish a connection between OTT client 310 and server(s) 330. As an example, process 300 may establish a connection between OTT client 310 and server(s) 330 using a QUIC connection protocol. Thus, e.g., OTT client 310 may transmit a send message RPC along with a security token that indicates authorization to establish a connection with server(s) 330. The send message RPC may include message 314 from OTT client 310, e.g., such that 0-RTT handshakes are implemented between OTT client 310 and server(s) 330 and/or the message 314, formatted in the RCS protocol and packaged according to the OTT protocol, is sent to server(s) 330 along with the send message RPC.

At server(s) 330, message 314 formatted in the RCS protocol and packaged according to the OTT protocol converted into a message 316 for transmission to the RCS client 320. Moreover, server(s) 330 may convert the OTT protocol used for packaging message 314 at the transport layer into the RCS protocol. Thus, server(s) 330 may reformat message 314 into the message 316 such that the payload of message 314 remains formatted in the RCS protocol but is repackaged according to the RCS protocol. Thus, message 316 may be formatted in the RCS protocol at the transport layer. Server(s) 330 may thus be configured for transmitting message 316 to RCS client 320 with the payload of message 314 serialized according to the RCS protocol and packaged according to the RCS protocol at the transport layer, and RCS client 320 may receive message 316 with the payload of message 314 serialized according to the RCS protocol and packaged according to the RCS protocol at the transport layer.

As shown in the bottom portion of FIG. 3A, process 300 may also transmit messages from RCS client 320 to OTT client 310 via server(s) 330. In particular, RCS client 320 may format a message 322 to OTT client 310 in the RCS protocol. Thus, e.g., a payload of message 322, e.g., one or both of a serialization layer and an encryption layer of message 322, may be formatted in the RCS protocol, and message 322 may also be formatted in the RCS protocol at the transport layer. The message 322 may be sent from RCS client 320 to server(s) 330 using known RCS procedures.

At server(s) 330, message 322 may be reformatted into a message 324 for OTT client 310, and message 322 may have an OTT protocol. Moreover, the payload from message 322 may remain formatted in the RCS protocol for message 324, and the payload of message 324 may be packaged according to the OTT protocol at the transport layer. Thus, the payload of message 324 may be formatted in the RCS protocol and may be packaged within the OTT protocol. Thus, the RCS protocol format of the transferred payload may be advantageously decoupled from the OTT protocol transport layer. To transmit the message 324 formatted in the OTT protocol, server(s) 330 may check for an open connection between server(s) 330 and OTT client 310. When an open connection exists between server(s) 330 and OTT client 310, server(s) 330 may transmit message 324 to OTT client 310. When no open connection exists, server(s) 330 may transmit a pull trigger to OTT client 310 indicating that message 324 is available for download. The pull trigger may be sent via Firebase Cloud Messaging (FCM) in certain example embodiments. After receipt of the pull trigger, OTT client 310 may transmit a bind RPC to server(s) 330 along with a security token that indicates authorization to establish a connection with server(s) 330. In response to the bind RPC, server(s) 330 may open the connection and transmit message 324 to OTT client 310.

Process 300 may advantageously maintain the RCS protocol for the transmission of messages both from OTT clients 310 to RCS clients 320 and from RCS clients 320 to OTT clients 310. Thus, message transmitted via process 300 can share a number of components with classic RCS, such as the serialization and encryption layers. As an example, when OTT client 310 wants to send a message, OTT client 310 may provide a structured message object to an RCS transport, and a payload of this message may then be serialized into bytes according to the RCS protocol, such as a PIDF-LO XML blob, and handed to the encryption layer, which encrypts the original message type and the serialization into a different, encrypted payload. This payload is then placed into the OTT protocol by OTT client 310 along with associated meta-info, such as destination, timestamp, and message-id, and sent to server(s) 330, e.g., via gRPC. As an example, a messaging application implementing process 300 may be configured in the manner shown in FIG. 3B, e.g., such that an RCS payload is packaged within an OTT transport layer.

Transmission of messages formatted in RCS protocol conventionally require at least twelve (12) roundtrip exchanges and thus a persistent connection. Advantageously, process 300 may assist with reducing the required roundtrip exchanges to one or two (1 or 2) and reduce the need for a persistent connection for transmission of messages formatted in RCS protocol. Thus, the OTT protocol may advantageously provide a session-less and connection-less protocol for transmission of RCS messages.

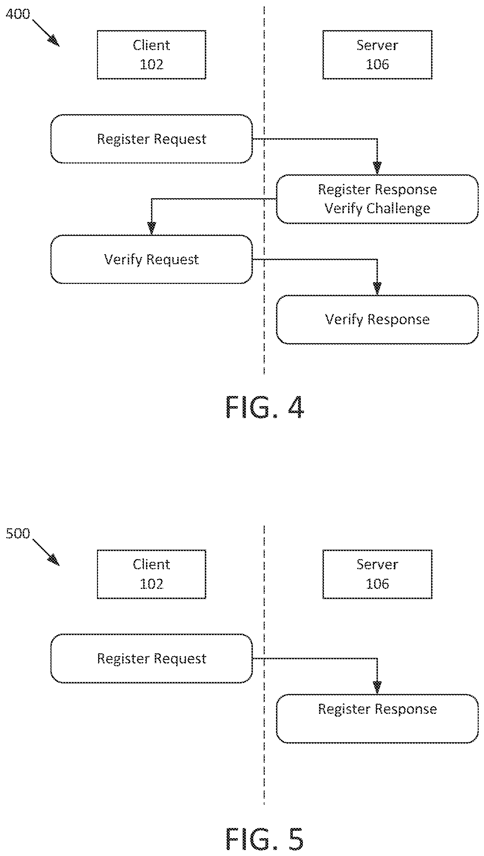

Example processes, such as an application programming interfaces (API), for an OTT protocol will now be described in greater detail below with reference to FIGS. 4 through 11. It will be understood that the various processes shown in FIGS. 4 through 11 may be performed in combination with one another or in various sequences to provide desired functionality, e.g., for an instant messaging application configured for communication with messages formatted in the OTT protocol. In addition, the processes shown in FIGS. 4 through 11 are described in greater detail below in the context of network environment 100 shown in FIG. 1 and the electronic system 200 shown in FIG. 2 for convenience and by way of example only. It will be understood that the processes shown in FIGS. 4 through 11 may be implemented in other suitable computing systems in alternative example embodiments.

FIG. 4 illustrates a process 400, such as an application programming interface (API), by which a client, such as client 102, may be registered with a server, such as server(s) 106, according to example embodiments of the present disclosure. Process 400 may advantageously register an identity of client 102 with server(s) 106, allow client 102 to prove ownership of the identity to server(s) 106, allow server(s) 106 to provide and/or refresh a token to client 102. The token provided by the server(s) 106 to client 102 as part of process 400 may be used by client 102 to connect to server(s) 106. Thus, the token may allow resumption of a connection between client 102 and server(s) 106 at will, e.g., and thereby avoid SIP registration requirements around maintaining a persistent connection. For example, the token may be included with each of the requests transmitted from client 102 to server(s) 106 described below to assist with opening the connection between client 102 and server(s) 106 in response to the requests from client 102.

As shown in FIG. 4, process 400 may include client 102 transmitting a register request to server(s) 106. The register request may include an ID of the client 102 and registration data. The register request may also include one or more capabilities of client 102 in certain example embodiments. In response to the register request, server(s) 106 may transmit a register response and/or a challenge to client 102. The register response may include a token that indicates authorization to establish a connection with server(s) 106 in subsequent communications between client 102 and server(s) 106. The challenge may include a test to provide verification of the ID of the client 102. Client 102 may then transmit a verify request to server(s) 106. The verify request may include a verification of the ID of the client 102, e.g., SMS or ACS token. In response to the verify request from client 102, server(s) 106 may transmit a verify response to client 102 that includes the token.

FIG. 5 illustrates a process 500, such as an API, by which a client, such as client 102, may be registered with a server, such as server(s) 106, according to example embodiments of the present disclosure. Process 500 may be used when client 102 has been previously verified for server(s) 106. For example, client 102 may have previously registered for server(s) 106, e.g., such that process 500 may correspond to a request to refresh the token. As another example, client 102 may have previously proven ownership of the ID to server(s) 106 in the context of another application, e.g., a phone was verified when registering for another application.

As shown in FIG. 5, process 500 may include client 102 transmitting a register request to server(s) 106. The register request may include an ID of the client 102 and registration data. The register request may also include one or more capabilities of client 102 in certain example embodiments. In response to the register request, server(s) 106 may transmit a register response to client 102. The register response may include a token that indicates authorization to establish a connection with server(s) 106 in subsequent communications between client 102 and server(s) 106.

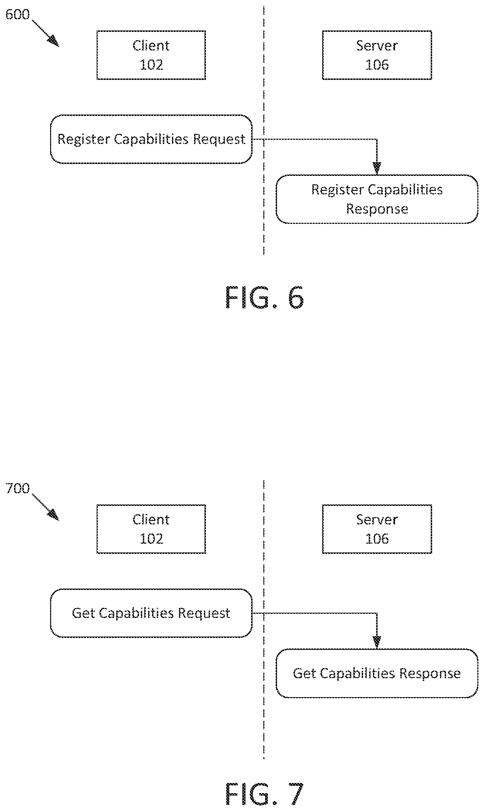

FIG. 6 illustrates a process 600, such as an API, by which a client, such as client 102, may register capabilities with a server, such as server(s) 106, according to example embodiments of the present disclosure. Process 600 may assist with defining messaging operations that client 102 supports. Using process 600, clients 102, 104 may exchange capabilities to understand how client 102, 104 should communicate and what types of messages can be sent between clients 102, 104. While capabilities may be influenced by many factors, in general, the capabilities rarely change. However, examples of changes in capabilities include carrier changes, phone changes, data plan capacity saturation, etc.

Prior to process 600, client 102 may registered, e.g., using process 400 (FIG. 4) or process 500 (FIG. 5) described above, and the registered client 102 may transmit and/or update the capabilities of client 102 with server(s) 106, e.g., in response to a change in the capabilities of client 102 or expiration of the capabilities of client 102 stored within server(s) 106, during process 600. The capabilities of client 102 stored in server(s) 106 may have an expiration, e.g., that is selected based on the characteristics of the capabilities, such as how often the capabilities change and the cost of frequent characteristic querying. The selected expiration may assist with preventing usage of faulty capabilities due to change/removal without updating server(s) 106, such as client 102 being destroyed, SIM card changes, etc. Server(s) 106 may initiate a pull to retrieve the capabilities of client 102 at expiration or shortly before expiration. Alternatively, server(s) 106 and client 102 may coordinate an intermittent refresh of the capabilities of client 102 stored by server(s) 106.

As shown in FIG. 6, process 600 may include client 102 transmitting a register capabilities request to server(s) 106. The register capabilities request may include various capabilities of client 102. For example, the register capabilities request may include: whether client 102 supports file transfer; whether client 102 supports file transfer thumbnails; whether client 102 supports group chat file transfer; whether client 102 supports group chat; whether client 102 supports chat; general messaging capabilities of client 102; whether client 102 supports location push; whether client 102 supports rich business messaging (RBS); whether client 102 supports image share; whether client 102 supports video share; whether client 102 supports revoke; whether client 102 supports stickers; etc. The server(s) 106 may then transmit a register capabilities response to client 102 that acknowledges receipt of the register capabilities request from client 102. The capabilities of client 102 received with the register capabilities request may be cached within server(s) 106, e.g., such that the capabilities of client 102 may be transmitted to other clients, as discussed in greater detail below.

FIG. 7 illustrates a process 700, such as an API, by which a client, such as client 102, may request capabilities of another client, such as client 104, from a server, such as server(s) 106, according to example embodiments of the present disclosure. The capabilities of one or both of clients 102, 104 may be stored within server(s) 106, e.g., using process 600 (FIG. 6) described above. Thus, using process 700, client 102 may query server(s) 106 for the capabilities of client 104 stored within server(s) 106. When the capabilities of client 104 are cached by server(s) 106, server(s) 106 transfers the cached capabilities of client 104 to client 102.

As shown in FIG. 7, process 700 may include client 102 transmitting a get capabilities request to server(s) 106. The get capabilities request from client 102 to server(s) 106 may include an ID of client 104 for the requested capabilities. In response to the get capabilities request, server(s) 106 may transmit a capabilities response to client 102. When the capabilities of client 104 are cached by server(s) 106, the capabilities response may include the capabilities of client 104 cached within server(s) 106. When the capabilities of client 104 are not cached by server(s) 106, server(s) 106 may delay capabilities response until the client 104 registers the characteristics of client 104 with server, e.g., using process 600 (FIG. 6). The get capabilities request may have a timeout indicating that client 102 needs to retry the get capabilities request, e.g., after a few seconds. Thus, client 102 may repeat transmission of the get capabilities request until the capabilities of client 104 are cached by server(s) 106. In alternative example embodiments, server(s) 106 may transmit a capabilities pending response indicating that server(s) 106 will fetch the capabilities of client 104 and then deliver the capabilities of client 104 in another message.

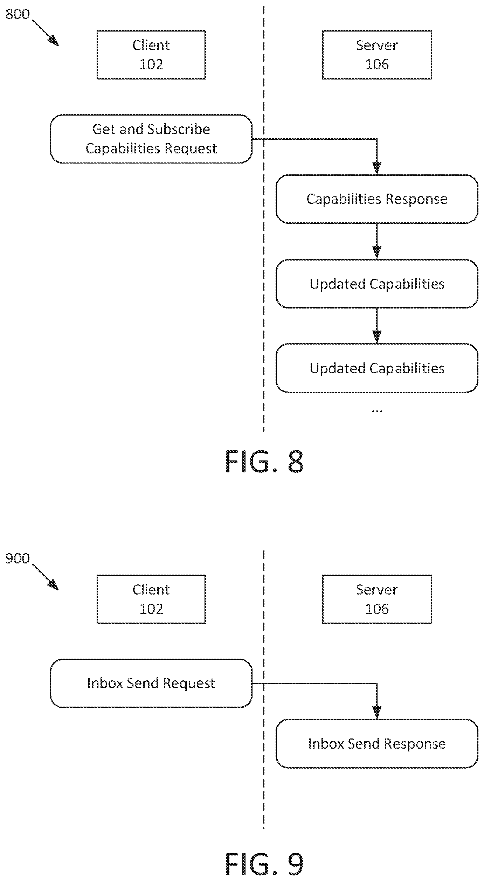

FIG. 8 illustrates a process 800, such as an API, by which a client, such as client 102, may subscribe to receive capabilities of another client, such as client 104, from a server, such as server(s) 106, according to example embodiments of the present disclosure. The capabilities of one or both of clients 102, 104 may be stored within server(s) 106, e.g., using process 600 (FIG. 6) described above. Using process 800, client 102 may subscribe to server(s) 106 for updates regarding the capabilities of client 104 stored within server(s) 106. When the capabilities of client 104 cached by server(s) 106 change, server(s) 106 may transfer the updated cached capabilities of client 104 to client 102. Subscribing to updates for the cached capabilities of client 104 may allow client 102 to avoid polling of server(s) 106 for such information.

As shown in FIG. 8, process 800 may include client 102 transmitting a get and subscribe capabilities request to server(s) 106. The get and subscribe capabilities request from client 102 to server(s) 106 may include an ID of client 104 for the requested capabilities. In response to the get and subscribe capabilities request, server(s) 106 may transmit a capabilities response to client 102. When the capabilities of client 104 are cached by server(s) 106, the capabilities response may include the capabilities of client 104 cached within server(s) 106. In addition, server(s) 106 may transmit an updated capabilities response to client 102, e.g., each time that the capabilities of client 104 cached by server(s) 106 change. Client 102 may unsubscribe from updates of the capabilities of client 104 by transmitting an unsubscribe capabilities request to server(s) 106 that includes the ID of client 104.

FIG. 9 illustrates a process 900, such as an API, by which a client, such as client 102, may send messages to a server, such as server(s) 106, or another client, such as client 104, according to example embodiments of the present disclosure. Process 900 may be used to send messages from client 102 to server(s) 106 and/or client 104. For example, process 900 may be used to: send chat messages, which may include one or more of a file, an image, a video, and a location, to client 104; send a typing (ephemeral) notification message to client 104; and send message receipts, such as read or delivered to client 104. At server 106, the data in the message from client 102 may not be inspected, e.g., with the exception that server(s) 106 may determine a content-type of the message to assist with delivery of the message. According to example aspects of the present subject matter, a protocol or format of the transferred message is decoupled the transport layer. A protocol, such as RCS, may be used to convert high level objects into byte format, and the serialization layer will also be responsible for proxy content, such as files, images, videos, locations, typing notification messages, and message receipts.

As shown in FIG. 9, process 900 may include client 102 transmitting an inbox send request to server(s) 106. The inbox send request may include necessary information for sending an RCS message to client 104, such as a recipient ID of client 104, a sender ID of client 102, and a message ID. Utilizing process 900, the same OTT protocol may be used for all message types. A data field of the OTT protocol may encapsulate different message payloads, and a content type of the OTT protocol may describe the payload. Thus, e.g., server(s) 106 may package messages formatted in the RCS protocol from client 102 within the OTT protocol. For example, when the message from client 102 is an RCS chat message, the content type of the OTT protocol can be text/plain with the data field of the OTT protocol corresponding to the message characters. As another example, when the message from client 102 is an E2EE message, the content type of the OTT protocol can describe the encrypted envelope (data) with the data field of the OTT protocol corresponding to the encrypted data.

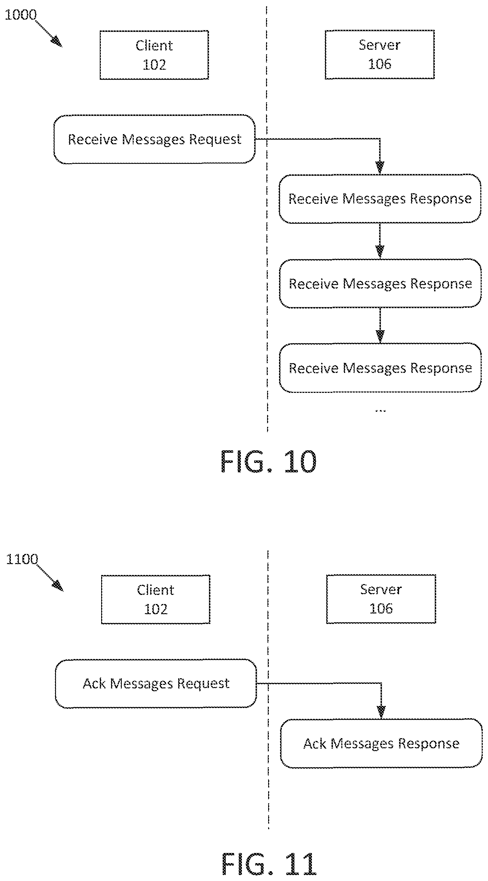

FIG. 10 illustrates a process 1000, such as an API, by which a client, such as client 102, may receive messages from a server, such as server(s) 106, according to example embodiments of the present disclosure. Process 1000 may be a streaming remote procedure call, such as a gRPC call, that opens a communications channel between client 102 and server(s) 106. Messages may be delivered to client 102 through the communications channel for as long as the communications channel remains open. When the communications channel closes, the communications channel may be reestablished by client 102, e.g., using process 1000 again. With process 1000, server(s) 106 may know when a new message needs to be delivered to client 102. When the communications channel between client 102 and server(s) 106 is not currently open, server(s) 106 may notify client 102 of the need to open the communications channel in order to receive the new messages by sending a pull trigger, e.g., via FCM. The pull trigger may include identity information required by client 102 to open the correct communications channel.

As shown in FIG. 10, process 1000 may include client 102 transmitting a receive messages request to server(s) 106. The receive messages request may include the token that indicates authorization to establish the connection with server(s) 106, e.g., obtained by registering client 102 with server(s) 106 via process 400 (FIG. 4) and/or process 500 (FIG. 5). In response to the receive messages request, server(s) 106 may transmit one or more receive messages response. The receive messages response(s) may include message(s) available on server(s) 106 for client 102. For example, a payload of the receive messages response may include conversation messages, including any content originating in a conversation, such as chat, file transfer, location, etc. The receive messages response may contain a content type that indicates which message type is encoded in the payload bytes. A payload of the receive messages response may also include disposition notifications, such as delivery and read receipts for sent messages. A payload of the receive messages response may further include ephemeral typing notifications, e.g., which are only delivered when the communications channel between client 102 and server(s) 106 is currently open when server(s) 106 attempts delivery. A payload of the receive messages response may additionally include group notifications indicating group operations implemented by another group member, such as creating the group, adding users to the group, users leaving the group, etc. The token may also be updated or refreshed by server(s) 106 in response to the receive messages request.

FIG. 11 illustrates a process 1100, such as an API, by which a client, such as client 102, may acknowledge receipt of messages from a server, such as server(s) 106, according to example embodiments of the present disclosure. Messages received by client 102, e.g., via process 1000, may be acknowledged back to server(s) 106 so that server(s) 106 does not to attempt to deliver the messages again. The communications channel between client 102 and server(s) 106 established via process 1000 may be "one-sided" in that the server(s) 106 may be unable to know that client 102 has dropped the connection between client 102 and server(s) 106. For instance, when gRPC is used to open the communications channel between client 102 and server(s) 106, the gRPC mechanism may not indicate whether the message was processed or persisted at client 102. Process 1100 may be used to confirm processing of messages from server(s) 106 at client 102 and that delivery is complete.

As shown in FIG. 11, process 1100 may include client 102 transmitting an ack message request to server(s) 106. The ack message request may include the message ID of one or more messages received by client 102, e.g., via process 1000, and an ID of client 102. In response to the ack message request, server(s) 106 may transmit an ack message response to client 102 that acknowledges the ack message request.

While described in greater detail below in the context of network environment 100 shown in FIG. 1, the electronic system 200 shown in FIG. 2, and the processes 400 through 1100 shown in FIGS. 4 through 11, respectively, for convenience and by way of example only, it will be understood that the various example methods described below may be implemented in other suitable computing systems in alternative example embodiments.

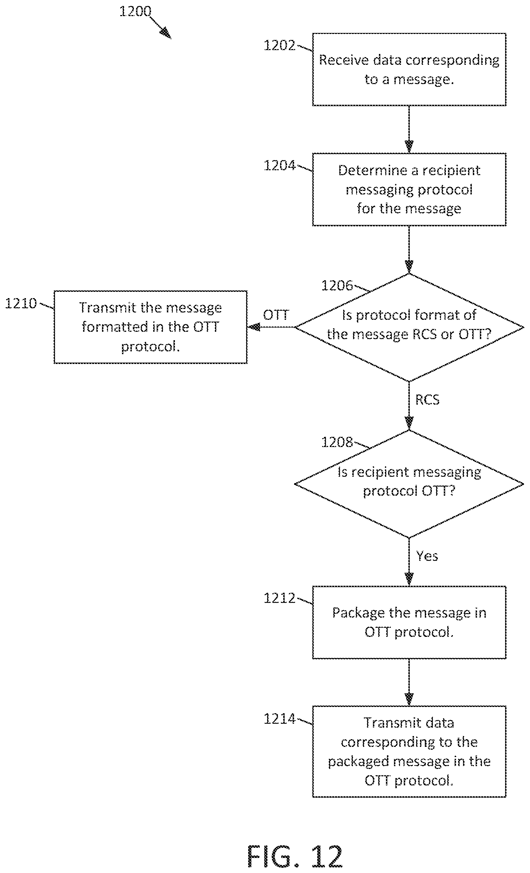

FIG. 12 depicts a flow chart diagram of an example method for messaging communications between RCS and OTT protocols, e.g., for instant messaging applications. Although FIG. 12 depicts steps performed in a particular order for purposes of illustration and discussion, the methods of the present disclosure are not limited to the particularly illustrated order or arrangement. The various steps of method 1200 can be omitted, rearranged, combined, and/or adapted in various ways without deviating from the scope of the present disclosure.

At 1202, data corresponding to a message may be received, e.g., by server(s) 106. For instance, server(s) 106 may receive the data corresponding to the message from client 102 at 1202. Thus, e.g., client 102 may transmit the data corresponding to the message to server(s) 106 at 1202 via network 108. The message received at 1202 may be a user message or a control message. Thus, the message received at 1202 may be, e.g., a chat message, a delivery receipt, a read receipt, a typing indicator, etc. At 1202, a protocol format of the message may also be determined. For instance, the message received at 1202 may be formatted in RCS or OTT, and server(s) 106 may analyze the content type of the message received at 1202 to determine the protocol format, e.g., of data encoded in a payload of the message.

At 1204, a recipient messaging protocol for the message may be determined. For instance, a protocol format used by client 104, which may be the intended recipient of the message received at 1202, may be determined at 1204. Client 104 may be configured to receive messages formatted in RCS or OTT, and server(s) 106 may determine which protocol format is used by client 104 for messages. The recipient messaging protocol may be cached within server(s) 106 as a capability of client 104, e.g., using process 600. Thus, e.g., server(s) 106 may determine the protocol format used by client 104 for messages at 1204 using the cached capability of client 104 within server(s) 106. As an alternative, server(s) 106 may poll client 104 to determine the protocol format used by client 104 for messages at 1204.

At 1206, the determined protocol format of the message may be RCS or OTT. At 1208, the determined recipient message protocol may be OTT. When the message from 1202 is formatted in OTT (e.g., and the determined recipient messaging protocol for the message is OTT), the message from 1202 may be transmitted using the OTT protocol at 1210. For instance, at 1210, server(s) 106 may directly transmit the message from 1202 to client 104 without modification of message. Moreover, server(s) 106 may check for an open connection between server(s) 106 and client 104, e.g., when client 104 is registered using process 400 (FIG. 4) or process 500 (FIG. 5). When an open connection exists between server(s) 106 and client 104, server(s) 106 may transmit the message from 1202 in the OTT protocol to client 104. When no open connection exists, server(s) 106 may transmit a pull trigger to client 104 indicating that the message in the OTT protocol is available for download. After receipt of the pull trigger, client 104 may transmit a bind RPC to server(s) 106 along with a token indicating authorization to establish the connection with server(s) 106. In response to the bind RPC, server(s) 106 may transmit the message in the OTT protocol to client 104 at 1210.

When the message from 1202 is formatted in RCS and the determined recipient messaging protocol for the message is OTT, the payload of message from 1202, which may be serialized in RCS protocol, may be repackaged within the OTT protocol at 1212. Moreover, the message received at 1202 may be repackaged into the OTT protocol at the transport layer. Thus, the RCS protocol format of the message from 1202 may be advantageously decoupled from the OTT protocol transport layer. The repackaged message may then be transmitted at 1214. For example, server(s) 106 may transmit the repackaged message to client 104 at 1214. To transmit the repackaged message formatted in the OTT protocol at 1214, server(s) 106 may check for an open connection between server(s) 106 and client 104, e.g., when client 104 is registered using process 400 (FIG. 4) or process 500 (FIG. 5). When an open connection exists between server(s) 106 and client 104, server(s) 106 may transmit the repackaged message in the OTT protocol to client 104. When no open connection exists, server(s) 106 may transmit a pull trigger to client 104 indicating that the repackaged message in the OTT protocol is available for download. After receipt of the pull trigger, client 104 may transmit a bind RPC to server(s) 106 along with a token indicating authorization to establish the connection with server(s) 106. In response to the bind RPC, server(s) 106 may transmit the repackaged message in the OTT protocol to client 104 at 1214.

Messages formatted in the OTT protocol at the transport layer may have numerous benefits from a developer perspective, such as complete control over client and server implementations and the messaging protocol, but OTT protocols may not be interoperable such that reach is restricted to users utilizing applications with the same OTT protocol. Messages formatted in the RCS protocol may be interoperable and thus offer greater reach. Method 1200 may assist with bridging the gap between the two different messaging protocols. For instance, method 1200 may allow for an OTT application that communicates via messages formatted in the OTT protocol to send and receive messages with an RCS application that communicates via messages formatted in the RCS protocol. Thus, the simplicity, coordination, and control of the OTT protocol may be available while still accessing the reach and interoperability of the RCS protocol.

As a particular example, method 1200 may be implemented for an OTT configured instant messaging application, such as Android Messages, on a server side in order to allow messages between the instant messaging application and the server to be sent and received in the OTT protocol, e.g., and thus access the increased reliability and performance of the OTT protocol. When the instant messaging application sends a message intended for a non-OTT user, then the server converts the OTT protocol used into the RCS protocol and completes the transfer of the message. When the message originates from a non-OTT user, then server accepts the message using the RCS protocol and delivers the message to the instant messaging application with the OTT protocol. Method 1200 may thus advantageously increase message reachability outside of users of the instant messaging application. Relative to known RCS applications, method 1200 may advantageously improve latency and reliability through the simpler OTT protocol, e.g., by not requiring a persistent connection and/or using modem gRPC transports instead of SIP/MSRP.

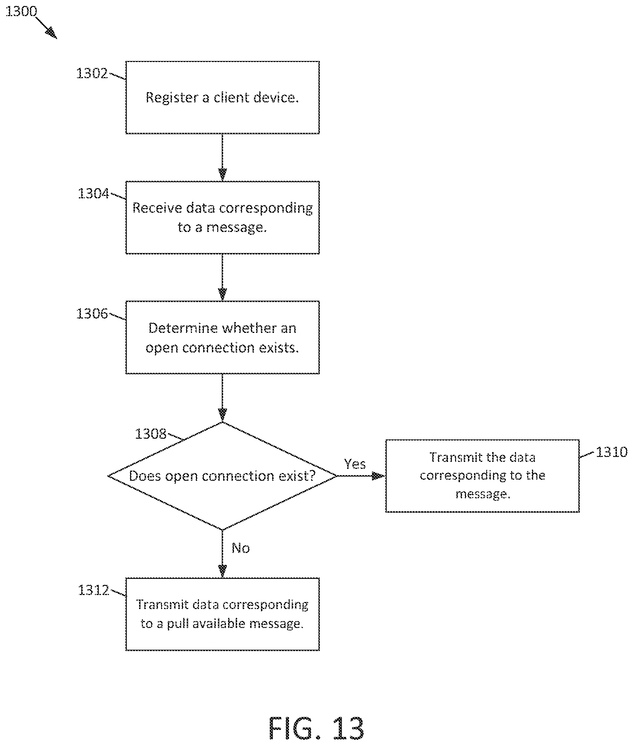

FIG. 13 depicts a flow chart diagram of an example method for transmitting RCS messages without requiring a persistent connection according to example embodiments of the present disclosure. Although FIG. 13 depicts steps performed in a particular order for purposes of illustration and discussion, the methods of the present disclosure are not limited to the particularly illustrated order or arrangement. The various steps of method 1300 can be omitted, rearranged, combined, and/or adapted in various ways without deviating from the scope of the present disclosure.

At 1302, data corresponding to a token may be transmitted, e.g., by server(s) 106. For instance, server(s) 106 may transmit the data corresponding to the token to client 102 at 1302. Server(s) 106 may transmit the token in response to registration of client 102, e.g., using process 400 (FIG. 4) or process 500 (FIG. 5). Thus, e.g., server(s) 106 may transmit the data corresponding to the token to client 102 at 1302 via network 108 in order to authorize client 102 to establish a connection with server(s) 106 in the future.

At 1304, data corresponding to a message may be received, e.g., by server(s) 106. For instance, server(s) 106 may receive the data corresponding to the message from client 104 at 1304. Thus, e.g., client 104 may transmit the data corresponding to the message to server(s) 106 at 1304 via network 108. A payload of the message received at 1304 may be formatted in the RCS protocol. Server(s) 106 may analyze the content type of the message received at 1304 to determine that the protocol format, e.g., of data encoded in the payload of the message, is the RCS protocol. The message received at 1304 may be a user message or a control message. Thus, the message received at 1304 may be, e.g., a chat message, a delivery receipt, a read receipt, a typing indicator, etc.

At 1306, it is determined whether an open connection exists. For example, at 1306, server(s) 106 may determine whether an open connection exists between server(s) 106 and client 102, which is the intended recipient of the data corresponding to the message received at 1304. When an open connection exists, e.g., between server(s) 106 and client 102, the message from 1304 may be transmitted at 1310. When no open connection exists, e.g., between server(s) 106 and client 102, data corresponding to a pull available message may be transmitted. For example, server(s) 106 may transmit the data corresponding to the pull available message to client 102 at 1312. The pull available message may indicate that the message received at 1304 is available to be pulled, e.g., from server(s) 106 to client 102.

Method 1300 may also include receiving data corresponding to both a pull message request and the token after 1312. For instance, in response to the pull available message, client 102 may transmit the data corresponding to both the pull message request and the token to server(s) 106. The token may indicate that client 102 is authorized to establish a connection with server(s) 106, and server(s) 106 may thus open a connection with client 102 in response to the data corresponding to both the pull message request and the token from client 102. With the open connection formed, server(s) 106 may transmit the message received at 1304 to client 102. Moreover, as described above, the payload of the message from 1304 may be formatted in RCS and client 102 is configured for receipt of messages formatted in OTT, the message received at 1304 may be repackaged within the OTT protocol at the transport layer prior to sending the message to client 102, e.g., in the manner described above for method 1200 (FIG. 12). Thus, the payload of the message received at 1304, which is formatted in the RCS protocol, may be repackaged into the OTT protocol by server(s) 106 and then sent to client 102 from server(s) 106.

A client configured for receipt of messages formatted in the RCS protocol may require a persistent connection to a server in order to receive messages. When the connection is broken, messages are only delivered when the connection is reopened. For mobile clients, this is problematic, e.g., because only operating system level processes maintain persistent connections and extended connections negatively affect battery usage, latency, and reliability. Method 1300 may assist with addressing these shortcomings of RCS messaging by registering the client with a server and providing a token, such as an FCM token, which is usable by the server to send notifications to the client, e.g., and wake the client up when the client is inactive. When the server receives a message intended for the client, the server: checks whether the client has an open connection with the server; when there is an open connection with the client, the server delivers the message on the open connection to the client; and when there is no open connection with the client, the server delivers an unpulled message notification, such as an FCM message, to the client, which indicates that the message is available for download. When the client receives the unpulled message notification, the client connects to the server using the token and pulls the message. Thus, method 1300 may effectively eliminate the need for a persistent connection to deliver messages formatted in the RCS protocol. Method 1200 may be used not only for user messages, such as text, file transfer, etc., but also control messages, such as the server indicating to the client that the client needs to perform an operation (like refreshing, provisioning, or registration), the server indicating to the client that the client has been added or removed from a group or that group properties have changed, that server requests a capability update from the client, delivery receipts, read receipts, typing indicators, etc.

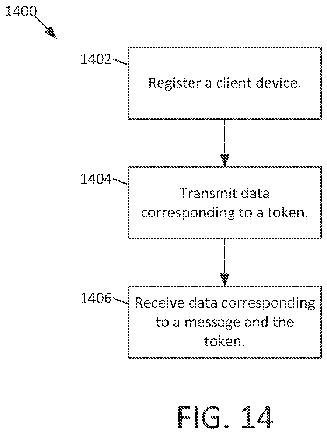

FIG. 14 depicts a flow chart diagram of an example method for transmitting RCS messages without requiring a persistent connection according to example embodiments of the present disclosure. Although FIG. 14 depicts steps performed in a particular order for purposes of illustration and discussion, the methods of the present disclosure are not limited to the particularly illustrated order or arrangement. The various steps of method 1400 can be omitted, rearranged, combined, and/or adapted in various ways without deviating from the scope of the present disclosure.

At 1402, client 102 is registered. For example, server(s) 106 may register client 102 at 1402. In particular, server(s) 106 may register client 102, e.g., using process 400 (FIG. 4) or process 500 (FIG. 5). At 1404, data corresponding to a token may be transmitted, e.g., by server(s) 106. For instance, server(s) 106 may transmit the data corresponding to the token to client 102 at 1404. Server(s) 106 may transmit the token in response to registration of client 102 at 1402. Thus, e.g., server(s) 106 may transmit the data corresponding to the token to client 102 at 1302 via network 108 in order to authorize client 102 to establish a connection with server(s) 106 in the future.

At 1406, data corresponding to a message and the token may be received, e.g., by server(s) 106. For instance, server(s) 106 may receive the data corresponding to the message and the token from client 102 at 1406. Thus, e.g., client 102 may transmit the data corresponding to the message and the token to server(s) 106 at 1406 via network 108. A payload of the message received at 1406 may be formatted in the RCS protocol. Server(s) 106 may analyze the content type of the message received at 1406 to determine the protocol format, e.g., of data encoded in the payload of the message, is the RCS protocol. The message received at 1406 may be a user message or a control message. Thus, the message received at 1406 may be, e.g., a chat message, a delivery receipt, a read receipt, a typing indicator, etc.

Method 1400 may also include receiving data corresponding to one or more capabilities of client 102. For instance, the data corresponding to one or more capabilities of client 102 may be transmitted by client 102 with the message received at 1406. As another example, the data corresponding to one or more capabilities of client 102 may be transmitted by client 102 after forming the connection with server(s) 106 at 1412. The capabilities of client 102 may correspond to the capabilities described above for process 600 (FIG. 6) and may be transmitted to server(s) 106 using process 600 (FIG. 6). In certain example embodiments, the one or more capabilities of client 102 may include a messaging protocol for client 102, such as OTT or RCS. The one or more capabilities of client 102 may be cached in server(s) 106. In addition, the cached one or more capabilities of client 102 may also be transmitted to client 104, e.g., using process 700 (FIG. 7) or process 800 (FIG. 8). The cached one or more capabilities of client 102 may be updated in server(s) 106 when received from client 102, e.g., using process 600 (FIG. 6). The updated cached one or more capabilities of client 102 may also be transmitted to client 104, e.g., using process 700 (FIG. 7) or process 800 (FIG. 8). The updated cached one or more capabilities of client 102 may be timestamped at each update. The timestamping may assist with determining whether client 102 is active. For instance, when 102 has recently updated the cached one or more capabilities of client 102 with server(s) 106, an open connection between client 102 and server(s) 106 may exist.

Using method 1400, an OTT protocol may be used to deliver RCS messages in a manner that is session-less and connection-less while maintaining the capabilities and behaviors of RCS messaging and having the same reach. Method 1400 may be based on gRPC and FCM. When a message needs to be sent, a connection may be opened to send the message from the client to the server with 0-RTT setup, e.g., using Quic. When a message needs to be received, an FCM notification may arrive from the server on the client indicating that the client should pull messages.

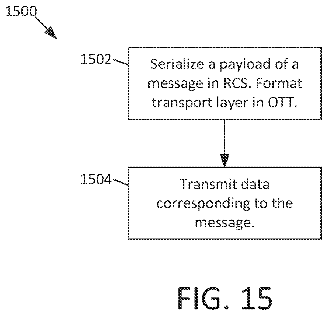

FIG. 15 depicts a flow chart diagram of an example method for transmitting RCS messages without requiring a persistent connection according to example embodiments of the present disclosure. Although FIG. 15 depicts steps performed in a particular order for purposes of illustration and discussion, the methods of the present disclosure are not limited to the particularly illustrated order or arrangement. The various steps of method 1500 can be omitted, rearranged, combined, and/or adapted in various ways without deviating from the scope of the present disclosure.

At 1502, a payload of a message is serialized in RCS protocol, and a transport layer of the message is formatted in OTT protocol. As an example, at 1502, client 102 may format a message such that the payload of the message, e.g., one or both of a serialization layer and an encryption layer of the message, is formatted in the RCS protocol and package the payload of the message in the OTT protocol, e.g., at the transport layer. Thus, client 102 may format message at 1502 such that the message is receivable by client 104 when client 104 is configured for receipt of RCS messages. As another example, at 1502, server(s) 106 may format a message, e.g., received from client 104 when client 104 is configured for transmission of RCS messages, by packaging the payload of the message from client 104, which is formatted in the RCS protocol, in the OTT protocol, e.g., at the transport layer. Thus, server(s) 106 may format message at 1502 such that the message is receivable by client 102 when client 102 is configured for receipt of OTT messages.

At 1504, data corresponding to the message from 1502 may be transmitted. As an example, client 102 may transmit the data corresponding to the message from 1502 to server(s) 106 at 1504. As another example, server(s) 106 may transmit the data corresponding to the message from 1502 to client 104 at 1504.

Using method 1500, an OTT protocol may be used to deliver RCS messages in a manner that is session-less and connection-less while maintaining the capabilities and behaviors of RCS messaging and having the same reach. Method 1500 may be based on gRPC and FCM. When a message needs to be sent, a connection may be opened to send the message from the client to the server with 0-RTT setup, e.g., using Quic. When a message needs to be received, an FCM notification may arrive from the server on the client indicating that the client should pull messages.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray^{®} discs, ultra density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending webpages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data to a client device. Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A method (300) at a server device (330), comprising:
receiving, with one or more processors of the server device and from a first client device (310), data corresponding to a message (314), wherein a payload of the message is formatted in a rich communication service, RCS, protocol and wherein the payload is packaged according to the RCS protocol at a transport layer of the message;
determining, with the one or more processors, a recipient messaging protocol for the message;
in response to determining that the recipient messaging protocol for the message is an over-the-top, OTT, protocol, repackaging, with the one or more processors, the payload of the message according to the OTT protocol at a transport layer of a repackaged message (316) to generate the repackaged message having the repackaged payload formatted in the RCS protocol; and
transmitting, with the one or more processors, data corresponding to the repackaged message to a second client device (320).

2. The method of claim 1, wherein the payload of the message is formatted in the RCS protocol such that at least one of a serialization layer of the message or an encryption layer of the message is formatted in the RCS protocol.

3. The method of claim 1 or 2, further comprising:
in response to registering the second client device, transmitting, with the one or more processors, a token to the second client device, wherein the token indicates authorization to establish a connection with the server device.

4. The method of claim 3, further comprising:
in response to registering the second client device, receiving, with the one or more processors, data corresponding to one or more capabilities of the second client device and the token, wherein the one or more capabilities of the second client device indicate at least a messaging protocol for the second client device; and
caching, with the one or more processors, the one or more capabilities of the second client device,
optionally wherein determining the recipient messaging protocol for the message further comprises:
determining, with the one or more processors, the recipient messaging protocol for the message based at least in part on the messaging protocol for the second client device indicated by the cached one or more capabilities of the second client device.

5. The method of claim 4, further comprising:
updating, with the one or more processors, the cached one or more capabilities of the second client device in response to receiving updated data corresponding to the one or more capabilities of the second client device from the second client device,
the method optionally further comprising:
timestamping, with the one or more processors, the cached one or more capabilities of the second client device at each update; and
determining, with the one or more processors, whether the second client device is active based at least in part on a timestamp of a most recent one of the cached one or more capabilities of the second client device.

6. The method of claim 5, further comprising:
receiving, with the one or more processors and from the first client device, a request to subscribe to updates to the one or more capabilities of the second client device; and
in response to updating the cached one or more capabilities of the second client device, sending, with the one or more processors, data corresponding to one or more updated capabilities of the second client device.

7. The method of any of claims 3-6, further comprising:
prior to transmitting the data corresponding to the repackaged message, determining, with the one or more processors, that no open connection exists with the second client device; and
in response to determining that no open connection exists with the second client device, transmitting, with the one or more processors, data corresponding to a pull available message to the second client device, wherein the pull available message indicates that the repackaged message is available to be pulled by the second client device,
the method optionally further comprising:
receiving, with the one or more processors and from the second client device, data corresponding to both a pull message request and the token,
wherein transmitting the data corresponding to the repackaged message comprises transmitting, with the one or more processors, the data corresponding to the repackaged message to the second client device in response to receiving, from the second client device, the data corresponding to both the pull message request and the token.

8. The method of claim 7, further comprising:
receiving, with the one or more processors, data corresponding to a second message for the second client device;
repackaging, with the one or more processors, a payload of the second message according to the OTT protocol at a transport layer of a repackaged second message to generate the repackaged second message; and
in response to determining that an open connection exists with the second client device, transmitting, with the one or more processors, data corresponding to the repackaged second message to the second client device.

9. The method of any of claims 1-8, further comprising:
receiving, with the one or more processors and from the second client device, data corresponding to a third message, wherein a payload of the third message is formatted in a rich communication service, RCS, protocol and wherein the payload of the third message is packaged according to the OTT protocol at the transport layer;
determining, with the one or more processors, the recipient messaging protocol for the third message;
in response to determining that the recipient messaging protocol for the third message is the RCS protocol, repackaging, with the one or more processors, the payload of the third message in the RCS protocol at a transport layer of a repackaged third message to generate the repackaged second message; and
transmitting, with the one or more processors, data corresponding to the repackaged third message to the first client device.

10. A method (1500) at a first client device (310), comprising:
generating (1502), using one or more processors of the first client device, a message (314), wherein a payload of the message is formatted in a rich communication service, RCS, protocol, and wherein the payload of the message is packaged according to an over-the-top, OTT, protocol at a transport layer; and
transmitting (1504), using the one or more processors, data corresponding to the message to a server device (330) to deliver the payload of the message to a second client device (320).

11. The method of claim 10, wherein at least one of a serialization layer of the message or an encryption layer of the message is formatted in the RCS protocol.

12. The method of claim 10 or 11, further comprising:
registering, using the one or more processors, the first client device with the server device;
in response to registering the first client device with the server device, receiving, using the one or more processors and from the server device, a token that indicates authorization to establish a connection with the server device,
optionally wherein the data corresponding to the message includes an indication of the token,
optionally the method further comprising:
in response to registering the first client device, sending, with the one or more processors and to the server device, data corresponding to one or more capabilities of the first client device and the token, wherein the one or more capabilities of the first client device indicate at least a messaging protocol for the first client device,
optionally the method further comprising:
determining, with the one or more processors, updated one or more capabilities of the first client device; and
in response to determining the updated one or more capabilities of the first client device, sending, with the one or more processors and to the server device, data corresponding to the updated one or more capabilities of the first client device and the token.

13. The method of any of claims 10-12, further comprising:
receiving, with the one or more processors and from the server device, data corresponding to a second message, wherein a payload of the second message is formatted in the RCS protocol and wherein the payload of the second message is packaged according to the RCS protocol at a transport layer of the second message,
optionally wherein receiving the data corresponding to the second message further comprises:
receiving, with the one or more processors and from the server device, data corresponding to a pull available message, wherein the pull available message indicates that the second message is available to be pulled by the first client device;
in response to receiving the data corresponding to the pull available message, sending, with the one or more processors and to the server device, data corresponding to both a pull message request and the token; and
in response to sending the data corresponding to both the pull message request and the token, receiving, with the one or more processors and from the server device, the data corresponding to the second message.

14. A computing device (102, 104, 106, 310) comprising:
one or more processors; and
a memory coupled to the one or more processors, the memory storing one or more programs that, when executed by the one or more processors, cause the one or more processors to perform the method of any of claims 1-13.

15. A computer program product comprising instructions that, when executed by one or more processors of a computing device, cause the one or more processors to perform the method of any one of claims 1-13.

## Patentansprüche

1. Verfahren (300) an einer Server-Vorrichtung (330), umfassend:
Empfangen, mit einem oder mehreren Prozessoren der Server-Vorrichtung und von einer ersten Client-Vorrichtung (310), von Daten, die einer Nachricht (314) entsprechen, wobei eine Nutzlast der Nachricht in einem Rich-Communication-Service-(RCS-)Protokoll formatiert ist und wobei die Nutzlast gemäß dem RCS-Protokoll auf einer Transportschicht der Nachricht verpackt ist;
Bestimmen, mit dem einen oder den mehreren Prozessoren, eines Empfänger-Messaging-Protokolls für die Nachricht;
als Reaktion auf das Bestimmen, dass das Empfänger-Messaging-Protokoll für die Nachricht ein Over-the-Top-(OTT-)Protokoll ist, Neuverpacken, mit dem einen oder den mehreren Prozessoren, der Nutzlast der Nachricht gemäß dem OTT-Protokoll auf einer Transportschicht einer neu verpackten Nachricht (316), um die neu verpackte Nachricht zu generieren, die die neu verpackte Nutzlast aufweist, die im RCS-Protokoll formatiert ist; und
Übertragen, mit dem einen oder den mehreren Prozessoren, von Daten, die der neu verpackten Nachricht entsprechen, an eine zweite Client-Vorrichtung (320).

2. Verfahren nach Anspruch 1, wobei die Nutzlast der Nachricht derart im RCS-Protokoll formatiert ist, dass mindestens eines von einer Serialisierungsschicht der Nachricht oder einer Verschlüsselungsschicht der Nachricht im RCS-Protokoll formatiert ist.

3. Verfahren nach Anspruch 1 oder 2, ferner umfassend:
als Reaktion auf das Registrieren der zweiten Client-Vorrichtung, Übertragen, mit dem einen oder den mehreren Prozessoren, eines Tokens an die zweite Client-Vorrichtung, wobei das Token eine Berechtigung zum Herstellen einer Verbindung mit der Server-Vorrichtung angibt.

4. Verfahren nach Anspruch 3, ferner umfassend:
als Reaktion auf das Registrieren der zweiten Client-Vorrichtung, Empfangen, mit dem einen oder den mehreren Prozessoren, von Daten, die einer oder mehreren Fähigkeiten der zweiten Client-Vorrichtung und dem Token entsprechen, wobei die eine oder die mehreren Fähigkeiten der zweiten Client-Vorrichtung mindestens ein Messaging-Protokoll für die zweite Client-Vorrichtung angeben; und
Zwischenspeichern, mit dem einen oder den mehreren Prozessoren, der einen oder mehreren Fähigkeiten der zweiten Client-Vorrichtung,
optional wobei das Bestimmen des Empfänger-Messaging-Protokolls für die Nachricht ferner umfasst:
Bestimmen, mit dem einen oder den mehreren Prozessoren, des Empfänger-Messaging-Protokolls für die Nachricht basierend zumindest teilweise auf dem Messaging-Protokoll für die zweite Client-Vorrichtung, das durch die zwischengespeicherten einen oder mehreren Fähigkeiten der zweiten Client-Vorrichtung angegeben wird.

5. Verfahren nach Anspruch 4, ferner umfassend:
Aktualisieren, mit dem einen oder den mehreren Prozessoren, der zwischengespeicherten einen oder mehreren Fähigkeiten der zweiten Client-Vorrichtung als Reaktion auf das Empfangen aktualisierter Daten, die der einen oder den mehreren Fähigkeiten der zweiten Client-Vorrichtung entsprechen, von der zweiten Client-Vorrichtung,
wobei das Verfahren optional ferner umfasst:
Versehen, mit dem einen oder den mehreren Prozessoren, der zwischengespeicherten einen oder mehreren Fähigkeiten der zweiten Client-Vorrichtung mit einem Zeitstempel bei jeder Aktualisierung; und
Bestimmen, mit dem einen oder den mehreren Prozessoren und basierend zumindest teilweise auf einem Zeitstempel einer aktuellsten der zwischengespeicherten einen oder mehreren Fähigkeiten der zweiten Client-Vorrichtung, ob die zweite Client-Vorrichtung aktiv ist.

6. Verfahren nach Anspruch 5, ferner umfassend:
Empfangen, mit dem einen oder den mehreren Prozessoren und von der ersten Client-Vorrichtung, einer Anfrage zum Abonnieren von Aktualisierungen der einen oder mehreren Fähigkeiten der zweiten Client-Vorrichtung; und
als Reaktion auf das Aktualisieren der zwischengespeicherten einen oder mehreren Fähigkeiten der zweiten Client-Vorrichtung, Senden, mit dem einen oder den mehreren Prozessoren, von Daten, die einer oder mehreren aktualisierten Fähigkeiten der zweiten Client-Vorrichtung entsprechen.

7. Verfahren nach einem der Ansprüche 3 bis 6, ferner umfassend:
vor dem Übertragen der Daten, die der neu verpackten Nachricht entsprechen, Bestimmen, mit dem einen oder den mehreren Prozessoren, dass keine offene Verbindung mit der zweiten Client-Vorrichtung besteht; und
als Reaktion auf das Bestimmen, dass keine offene Verbindung mit der zweiten Client-Vorrichtung besteht, Übertragen, mit dem einen oder den mehreren Prozessoren, von Daten, die einer Pull-Available-Nachricht entsprechen, an die zweite Client-Vorrichtung, wobei die Pull-Available-Nachricht angibt, dass die neu verpackte Nachricht verfügbar ist, um durch die zweite Client-Vorrichtung abgerufen zu werden,
wobei das Verfahren optional ferner umfasst:
Empfangen, mit dem einen oder den mehreren Prozessoren und von der zweiten Client-Vorrichtung, von Daten, die sowohl einer Pull-Nachrichtenanforderung als auch dem Token entsprechen,
wobei das Übertragen der Daten, die der neu verpackten Nachricht entsprechen, das Übertragen, mit dem einen oder den mehreren Prozessoren, der Daten, die der neu verpackten Nachricht entsprechen, an die zweite Client-Vorrichtung als Reaktion auf das Empfangen, von der zweiten Client-Vorrichtung, der Daten, die sowohl der Pull-Nachrichtenanforderung als auch dem Token entsprechen, umfasst.

8. Verfahren nach Anspruch 7, ferner umfassend:
Empfangen, mit dem einen oder den mehreren Prozessoren, von Daten, die einer zweiten Nachricht für die zweite Client-Vorrichtung entsprechen;
Neuverpacken, mit dem einen oder den mehreren Prozessoren, einer Nutzlast der zweiten Nachricht gemäß dem OTT-Protokoll auf einer Transportschicht einer neu verpackten zweiten Nachricht, um die neu verpackte zweite Nachricht zu generieren; und
als Reaktion auf das Bestimmen, dass eine offene Verbindung mit der zweiten Client-Vorrichtung besteht, Übertragen, mit dem einen oder den mehreren Prozessoren, von Daten, die der neu verpackten zweiten Nachricht entsprechen, an die zweite Client-Vorrichtung.

9. Verfahren nach einem der Ansprüche 1 bis 8, ferner umfassend:
Empfangen, mit dem einen oder den mehreren Prozessoren und von der zweiten Client-Vorrichtung, von Daten, die einer dritten Nachricht entsprechen, wobei eine Nutzlast der dritten Nachricht in einem Rich-Communication-Service-(RCS-)Protokoll formatiert ist und wobei die Nutzlast der dritten Nachricht gemäß dem OTT-Protokoll auf der Transportschicht verpackt ist;
Bestimmen, mit dem einen oder den mehreren Prozessoren, des Empfänger-Messaging-Protokolls für die dritte Nachricht;
als Reaktion auf das Bestimmen, dass das Empfänger-Messaging-Protokoll für die dritte Nachricht das RCS-Protokoll ist, Neuverpacken, mit dem einen oder den mehreren Prozessoren, der Nutzlast der dritten Nachricht im RCS-Protokoll auf einer Transportschicht einer neu verpackten dritten Nachricht, um die neu verpackte zweite Nachricht zu generieren; und
Übertragen, mit dem einen oder den mehreren Prozessoren, von Daten, die der neu verpackten dritten Nachricht entsprechen, an die erste Client-Vorrichtung.

10. Verfahren (1500) an einer ersten Client-Vorrichtung (310), umfassend:
Generieren (1502), unter Verwendung eines oder mehrerer Prozessoren der ersten Client-Vorrichtung, einer Nachricht (314), wobei eine Nutzlast der Nachricht in einem Rich-Communication-Service-(RCS-)Protokoll formatiert ist und wobei die Nutzlast der Nachricht gemäß einem Over-the-Top-(OTT-)Protokoll auf einer Transportschicht verpackt ist; und
Übertragen (1504), unter Verwendung des einen oder der mehreren Prozessoren, von Daten, die der Nachricht entsprechen, an eine Server-Vorrichtung (330), um die Nutzlast der Nachricht an eine zweite Client-Vorrichtung (320) zuzustellen.

11. Verfahren nach Anspruch 10, wobei mindestens eine von einer Serialisierungsschicht der Nachricht oder einer Verschlüsselungsschicht der Nachricht im RCS-Protokoll formatiert ist.

12. Verfahren nach Anspruch 10 oder 11, ferner umfassend:
Registrieren, unter Verwendung des einen oder der mehreren Prozessoren, der ersten Client-Vorrichtung bei der Server-Vorrichtung;
als Reaktion auf das Registrieren der ersten Client-Vorrichtung bei der Server-Vorrichtung, Empfangen, unter Verwendung des einen oder der mehreren Prozessoren und von der Server-Vorrichtung, eines Tokens, das eine Berechtigung zum Herstellen einer Verbindung mit der Server-Vorrichtung angibt,
optional wobei die Daten, die der Nachricht entsprechen, eine Angabe des Tokens einschließen,
optional wobei das Verfahren ferner umfasst:
als Reaktion auf das Registrieren der ersten Client-Vorrichtung, Senden, mit dem einen oder den mehreren Prozessoren und an die Server-Vorrichtung, von Daten, die einer oder mehreren Fähigkeiten der ersten Client-Vorrichtung und dem Token entsprechen, wobei die eine oder die mehreren Fähigkeiten der ersten Client-Vorrichtung mindestens ein Messaging-Protokoll für die erste Client-Vorrichtung angeben,
optional wobei das Verfahren ferner umfasst:
Bestimmen, mit dem einen oder den mehreren Prozessoren, einer oder mehrerer aktualisierter Fähigkeiten der ersten Client-Vorrichtung; und
als Reaktion auf das Bestimmen der einen oder mehreren aktualisierten Fähigkeiten der ersten Client-Vorrichtung, Senden, mit dem einen oder den mehreren Prozessoren und an die Server-Vorrichtung, von Daten, die der einen oder den mehreren aktualisierten Fähigkeiten der ersten Client-Vorrichtung und dem Token entsprechen.

13. Verfahren nach einem der Ansprüche 10 bis 12, ferner umfassend:
Empfangen, mit dem einen oder den mehreren Prozessoren und von der Server-Vorrichtung, von Daten, die einer zweiten Nachricht entsprechen, wobei eine Nutzlast der zweiten Nachricht im RCS-Protokoll formatiert ist und wobei die Nutzlast der zweiten Nachricht gemäß dem RCS-Protokoll auf einer Transportschicht der zweiten Nachricht verpackt ist,
optional wobei das Empfangen der Daten, die der zweiten Nachricht entsprechen, ferner umfasst:
Empfangen, mit dem einen oder den mehreren Prozessoren und von der Server-Vorrichtung, von Daten, die einer Pull-Available-Nachricht entsprechen, wobei die Pull-Available-Nachricht angibt, dass die zweite Nachricht verfügbar ist, um durch die erste Client-Vorrichtung abgerufen zu werden;
als Reaktion auf das Empfangen der Daten, die der Pull-Available-Nachricht entsprechen, Senden, mit dem einen oder den mehreren Prozessoren und an die Server-Vorrichtung, von Daten, die sowohl einer Pull-Nachrichtenanforderung als auch dem Token entsprechen; und
als Reaktion auf das Senden der Daten, die sowohl der Pull-Nachrichtenanforderung als auch dem Token entsprechen, Empfangen, mit dem einen oder den mehreren Prozessoren und von der Server-Vorrichtung, der Daten, die der zweiten Nachricht entsprechen.

14. Rechenvorrichtung (102, 104, 106, 310), umfassend:
einen oder mehrere Prozessoren; und
einen Speicher, der mit dem einen oder den mehreren Prozessoren gekoppelt ist, wobei der Speicher ein oder mehrere Programme speichert, die, wenn sie durch den einen oder die mehreren Prozessoren ausgeführt werden, den einen oder die mehreren Prozessoren veranlassen, das Verfahren nach einem der Ansprüche 1 bis 13 durchzuführen.

15. Computerprogrammprodukt, umfassend Anweisungen, die, wenn sie durch einen oder mehrere Prozessoren einer Rechenvorrichtung ausgeführt werden, den einen oder die mehreren Prozessoren veranlassen, das Verfahren nach einem der Ansprüche 1 bis 13 durchzuführen.

## Revendications

1. Procédé (300) au niveau d'un dispositif serveur (330), comprenant :
la réception, à l'aide d'un ou plusieurs processeurs du dispositif serveur et à partir d'un premier dispositif client (310), de données correspondant à un message (314), dans lequel une charge utile du message est formatée dans un protocole de service de communication riche, RCS, et dans lequel la charge utile est conditionnée selon le protocole RCS au niveau d'une couche de transport du message ;
la détermination, à l'aide des un ou plusieurs processeurs, d'un protocole de messagerie du destinataire pour le message ;
en réponse à la détermination que le protocole de messagerie du destinataire pour le message est un protocole over-the-top, OTT, le reconditionnement, à l'aide des un ou plusieurs processeurs, de la charge utile du message selon le protocole OTT au niveau d'une couche de transport d'un message reconditionné (316) pour générer le message reconditionné ayant la charge utile reconditionnée formatée dans le protocole RCS ; et
la transmission, à l'aide des un ou plusieurs processeurs, des données correspondant au message reconditionné au niveau d'un second dispositif client (320).

2. Procédé selon la revendication 1, dans lequel la charge utile du message est formatée dans le protocole RCS de sorte qu'au moins une couche de sérialisation du message ou une couche de chiffrement du message soit formatée dans le protocole RCS.

3. Procédé selon la revendication 1 ou 2, comprenant en outre : en réponse à l'enregistrement du second dispositif client, la transmission, à l'aide des un ou plusieurs processeurs, d'un jeton au second dispositif client, dans lequel le jeton indique l'autorisation d'établir une connexion avec le dispositif serveur.

4. Procédé selon la revendication 3, comprenant en outre :
en réponse à l'enregistrement du second dispositif client, la réception, à l'aide des un ou plusieurs processeurs, de données correspondant à une ou plusieurs capacités du second dispositif client et au jeton, dans lequel les une ou plusieurs capacités du second dispositif client indiquent au moins un protocole de messagerie pour le second dispositif client ; et
la mise en cache, à l'aide des un ou plusieurs processeurs, des une ou plusieurs capacités du second dispositif client,
éventuellement dans lequel la détermination du protocole de messagerie du destinataire pour le message comprend en outre :
la détermination, à l'aide des un ou plusieurs processeurs, du protocole de messagerie du destinataire pour le message sur la base au moins en partie du protocole de messagerie du second dispositif client indiqué par les une ou plusieurs capacités mises en cache du second dispositif client.

5. Procédé selon la revendication 4, comprenant en outre :
la mise à jour, à l'aide des un ou plusieurs processeurs, des une ou plusieurs capacités mises en cache du second dispositif client en réponse à la réception de données mises à jour correspondant aux une ou plusieurs capacités du second dispositif client à partir du second dispositif client,
le procédé comprenant en outre éventuellement :
l'horodatage, à l'aide des un ou plusieurs processeurs, des une ou plusieurs capacités mises en cache du second dispositif client à chaque mise à jour ; et
le fait de déterminer, à l'aide des un ou plusieurs processeurs, si le second dispositif client est actif sur la base au moins en partie d'un horodatage d'une des capacités mises en cache les plus récentes du second dispositif client.

6. Procédé selon la revendication 5, comprenant en outre :
la réception, à l'aide des un ou plusieurs processeurs et à partir du premier dispositif client, d'une demande d'abonnement aux mises à jour des une ou plusieurs capacités du second dispositif client ; et
en réponse à la mise à jour des une ou plusieurs capacités mises en cache du second dispositif client, l'envoi, à l'aide des un ou plusieurs processeurs, de données correspondant à une ou plusieurs capacités mises à jour du second dispositif client.

7. Procédé selon l'une quelconque des revendications 3 à 6, comprenant en outre :
avant la transmission des données correspondant au message reconditionné, la détermination, à l'aide des un ou plusieurs processeurs, qu'aucune connexion ouverte n'existe avec le second dispositif client ; et
en réponse à la détermination qu'aucune connexion ouverte n'existe à l'aide du second dispositif client, la transmission, à l'aide des un ou plusieurs processeurs, de données correspondant à un message de disponibilité d'extraction au second dispositif client, dans lequel le message de disponibilité d'extraction indique que le message reconditionné est disponible pour être extrait par le second dispositif client,
le procédé comprenant en outre éventuellement :
la réception, à l'aide des un ou plusieurs processeurs et à partir du second dispositif client, de données correspondant à la fois à une demande de message d'extraction et au jeton,
dans lequel la transmission des données correspondant au message reconditionné comprend la transmission, à l'aide des un ou plusieurs processeurs, des données correspondant au message reconditionné au second dispositif client en réponse à la réception, à partir du second dispositif client, des données correspondant à la fois à la requête de message d'extraction et au jeton.

8. Procédé selon la revendication 7, comprenant en outre :
la réception, à l'aide des un ou plusieurs processeurs, de données correspondant à un deuxième message pour le second dispositif client ;
le reconditionnement, à l'aide des un ou plusieurs processeurs, d'une charge utile du deuxième message selon le protocole OTT au niveau d'une couche de transport d'un deuxième message reconditionné afin de générer le deuxième message reconditionné ; et
en réponse à la détermination qu'une connexion ouverte existe avec le second dispositif client, la transmission, à l'aide des un ou plusieurs processeurs, de données correspondant au deuxième message reconditionné au second dispositif client.

9. Procédé selon l'une quelconque des revendications 1 à 8, comprenant en outre :
la réception, à l'aide des un ou plusieurs processeurs et à partir du second dispositif client, de données correspondant à un troisième message, dans lequel une charge utile du troisième message est formatée dans un protocole de service de communication riche, RCS, et dans lequel la charge utile du troisième message est encapsulée selon le protocole OTT au niveau de la couche de transport ;
la détermination, à l'aide des un ou plusieurs processeurs, d'un protocole de messagerie du destinataire pour le troisième message ;
en réponse à la détermination que le protocole de messagerie du destinataire pour le troisième message est le protocole RCS, le reconditionnement, à l'aide des un ou plusieurs processeurs, de la charge utile du troisième message dans le protocole RCS au niveau de d'une couche transport d'un troisième message reconditionné pour générer le deuxième message reconditionné ; et
la transmission, à l'aide des un ou plusieurs processeurs, de données correspondant au troisième message reconditionné au second dispositif client.

10. Procédé (1500) au niveau d'un premier dispositif client (310), comprenant :
la génération (1502), à l'aide d'un ou plusieurs processeurs du premier dispositif client, d'un message (314), dans lequel une charge utile du message est formatée dans un protocole de service de communication riche, RCS, et dans lequel la charge utile du message est conditionnée selon un protocole over-the-top, OTT, au niveau d'une couche de transport ; et
la transmission (1504), à l'aide des un ou plusieurs processeurs, de données correspondant au message vers un dispositif serveur (330) pour livrer la charge utile du message à un second dispositif client (320).

11. Procédé selon la revendication 10, dans lequel au moins une couche de sérialisation du message ou une couche de chiffrement du message est formatée selon le protocole RCS.

12. Procédé selon la revendication 10 ou 11, comprenant en outre :
l'enregistrement, à l'aide des un ou plusieurs processeurs, du premier dispositif client auprès du dispositif serveur ;
en réponse à l'enregistrement du premier dispositif client auprès du dispositif serveur, la réception, à l'aide des un ou plusieurs processeurs et à partir du dispositif serveur, d'un jeton qui indique l'autorisation d'établir une connexion avec le dispositif serveur,
éventuellement dans lequel les données correspondant au message comportent une indication du jeton,
éventuellement, le procédé comprenant en outre :
en réponse à l'enregistrement du premier dispositif client, l'envoi, à l'aide des un ou plusieurs processeurs et vers le dispositif serveur, de données correspondant à une ou plusieurs capacités du premier dispositif client et au jeton, dans lequel les une ou plusieurs capacités du premier dispositif client indiquent au moins un protocole de messagerie pour le premier dispositif client,
éventuellement, le procédé comprenant en outre :
la détermination, à l'aide des un ou plusieurs processeurs, d'une ou plusieurs capacités mises à jour du premier dispositif client ; et
en réponse à la détermination des une ou plusieurs capacités mises à jour du premier dispositif client, l'envoi, à l'aide des un ou plusieurs processeurs et vers le dispositif serveur, de données correspondant aux une ou plusieurs capacités mises à jour du premier dispositif client et au jeton.

13. Procédé selon l'une quelconque des revendications 10 à 12, comprenant en outre :
la réception, à l'aide des un ou plusieurs processeurs et à partir du dispositif serveur, de données correspondant à un deuxième message, dans lequel une charge utile du deuxième message est formatée dans le protocole RCS et dans lequel la charge utile du deuxième message est conditionnée selon le protocole RCS au niveau d'une couche de transport du deuxième message,
éventuellement, dans lequel la réception des données correspondant au deuxième message comprend en outre :
la réception, à l'aide des un ou plusieurs processeurs et à partir du dispositif serveur, de données correspondant à un message de disponibilité d'extraction, dans lequel le message de disponibilité d'extraction indique que le deuxième message est disponible pour être extrait par le premier dispositif client ;
en réponse à la réception des données correspondant au message de disponibilité de l'extraction, l'envoi, à l'aide des un ou plusieurs processeurs et vers le dispositif serveur, des données correspondant à la fois à une demande de message d'extraction et au jeton ; et
en réponse à l'envoi des données correspondant à la fois au message de disponibilité de l'extraction et au jeton, la réception, à l'aide des un ou plusieurs processeurs et à partir du dispositif serveur, des données correspondant au deuxième message.

14. Dispositif informatique (102, 104, 106, 310), comprenant :
un ou plusieurs processeurs ; et
une mémoire couplée aux un ou plusieurs processeurs, la mémoire stockant un ou plusieurs programmes qui, lorsqu'ils sont exécutés par les un ou plusieurs processeurs, amènent les un ou plusieurs processeurs à réaliser le procédé selon l'une quelconque des revendications 1 à 13.

15. Produit de programme informatique comprenant des instructions qui, lorsqu'elles sont exécutées par un ou plusieurs processeurs d'un dispositif informatique, amènent les un ou plusieurs processeurs à réaliser le procédé selon l'une quelconque des revendications 1 à 13.
